# EUROPÄISCHE PATENTSCHRIFT

(11) **EP 3 606 696 B1**
(45) Veröffentlichungstag und Bekanntmachung des Hinweises auf die Patenterteilung: **23.02.2022**
(21) Anmeldenummer: 18714201.3
(22) Anmeldetag: 22.03.2018
(51) Int. Cl.: B23K 26/04, B23K 26/046, B23K 26/06

(54) **VERFAHREN UND VORRICHTUNG ZUR REGELUNG EINER FOKUSLAGE EINES ARBEITSLASERSTRAHLS SOWIE LASERBEARBEITUNGSKOPF MIT EINER DERARTIGEN VORRICHTUNG**
METHOD AND DEVICE FOR REGULATING A FOCUS OF A LASER BEAM AND A LASER PROCESSING HEAD WITH SUCH A DEVICE
PROCÉDÉ ET DISPOSITIF DE RÉGULATION D'UN FAISCEAU LASER ET D'UNE TÊTE DE TRAITEMENT LASER AU MOYEN D'UN TEL DISPOSITIF

(30) Priorität: 06.04.2017 DE 102017107402
(43) Veröffentlichungstag der Anmeldung: 12.02.2020
(73) Patentinhaber: Precitec GmbH & Co. KG, 76571 Gaggenau (DE)
(72) Erfinder: SPÖRL, Georg, 76287 Rheinstetten (DE); THIEL, Marc, 76532 Baden-Baden (DE)
(74) Vertreter: Ter Meer Steinmeister & Partner
(86) Internationale Anmeldenummer: PCT/EP2018/057316
(87) Internationale Veröffentlichungsnummer: WO 2018/184858

(56) Entgegenhaltungen:
- DE-A1- 10 061 644
- DE-A1-102007 035 485

## Beschreibung

Die Erfindung betrifft ein Verfahren und eine Vorrichtung zur Regelung einer Fokuslage eines Arbeitslaserstrahls zur Bearbeitung von Werkstücken sowie einen Laserbearbeitungskopf mit einer derartigen Vorrichtung.

Bei der Lasermaterialbearbeitung besteht häufig die Notwendigkeit die Fokuslage eines Arbeitslaserstrahls der jeweiligen Bearbeitungssituation anzupassen. Eine Möglichkeit um das zu erreichen ist die intern gesteuerte oder geregelte, motorische Bewegung einer oder mehrerer Linsen einer Optik in einem Laserbearbeitungskopf entlang der optischen Achse der Optik, also entlang einer internen Z-Achse.

In der DE 10 2014 101 477 A1 ist ein Laserbearbeitungskopf zur Bearbeitung eines Werkstücks mit einem Laserstrahl gezeigt, in dem eine strahlformende Optik an einer Halterung in Längsrichtung des Laserstrahls verschiebbar gelagert ist. Zur Verschiebung der Optik ist ein Bandantrieb vorgesehen, der von einem Motor, insbesondere von einem bürstenlosen Gleichstrommotor oder einem Schrittmotor angetrieben wird, um die Optik in die gewünschte Lage zu bewegen und sie in ihrer eingestellten Lage zu halten, selbst wenn große Trägheitskräfte in Folge von großen Beschleunigungen auftreten. Diese Patentschrift bildet die Grundlage für den Oberbegriff des Anspruchs 4.

Die EP 2 302 433 A2 beschreibt einen weiteren Laserbearbeitungskopf zur Bearbeitung eines Werkstücks mit einem Laserstrahl, der eine Optik aufweist, die im Laserbearbeitungskopf relativ zu diesem verschiebbar gelagert ist. Zur Verschiebung der Optik in Längsrichtung des Laserstrahls ist eine Verstellvorrichtung mit einem Synchron-Linearmotor vorgesehen.

Derartige Antriebe weisen eine direkte Umsetzung der Motorbewegung in die Bewegung der Optik auf, ohne Verwendung eines Getriebes oder einer Spindel. Der Vorteil der spielfreien Umsetzung der Bewegung wird mit dem Nachteil erkauft, dass keine Hemmung mechanischer Art besteht, um bei extern einwirkender Beschleunigung die Optik und damit einen Arbeitsfokus in der gewünschten Position zu halten.

Bei externen Beschleunigungen, die dadurch entstehen, dass der Laserbearbeitungskopf an einer weiteren, extern gesteuerten Z-Achse angebracht ist und entlang dieser Achse wiederum ruckartige Bewegungen ausführt, wird die Optik durch die Massenträgheit der Optik und eines sie tragenden Schlittens aus der Position gedrückt, so dass der Arbeitsfokus seine Sollposition entlang der optischen Achse der Optik verlässt.

Bei einem bisher verwendeten System erzeugt eine externe Beschleunigung eine Kraft (F = m ^{∗} a) auf den beweglichen Teil der Optik, also auf eine zur Arbeitsfokuseinstellung verstellbare Linseneinheit. Diese Kraft wirkt als Störgröße im Positionsregelkreis und erzeugt eine ungewollte Bewegung der Linseneinheit. Der Positionsregler erkennt diese Positionsabweichung und ändert entsprechend die Vorgabe an den Stromregelkreis, um die Linseneinheit in die gewünschte Linsenposition zurück zu bewegen und dort zu Halten. Dieser Regelvorgang braucht eine gewisse Zeit, während der die tatsächliche Linsenposition von der Sollposition abweicht.

DE 10 2007 035 485 A1 offenbart eine Laserschweißvorrichtung zum Fügen von Bauteilen, mit: einer Strahlungsquelle zum Erzeugen eines gerichteten und fokussierten Laserstrahls; eine mittels einer Roboteransteuerung manipulierbare Robotervorrichtung zum Führen und/oder Ausrichten des fokussierten Laserstrahls der Strahlungsquelle auf die Bauteile; einem von der Roboteransteuerung unabhängigen, der Roboteransteuerung überlagerten und auf die Ausrichtung des Laserstrahls wirkenden geschlossenen Regelkreis zum Kompensieren von in der Robotervorrichtung auftretenden Schwingungen.

DE 100 61 644 A1 offenbart ein Laserschweißverfahren, bei dem die Position eines zu schweißenden Objektes mittels einer Steuereinheit erfasst und ein Laserstrahl, insbesondere durch Ablenkung an einem einstellbaren Umlenkspiegel, auf die gewünschte Position an dem Objekt gerichtet wird, dadurch gekennzeichnet, dass die Bewegungsparameter des Objektes erfasst werden und daraus mittels der Steuereinheit ein Korrekturwert für die Ausrichtung des Laserstrahles bestimmt wird.

Die verzögerte Reaktion des Systems auf die externe Beschleunigung liegt im Prinzip des Regelkreises begründet, der erst dann eine Stellgröße aufbauen kann, wenn eine nennenswerte Abweichung der Ist-Linsenposition von der Sollposition festgestellt wurde, und somit erst nach dem Auftreten der Positionsabweichung korrigierend eingreifen kann.

Ein bekanntes Verfahren um hochdynamische Bewegungsabläufe zu ermöglichen, basiert auf dem Prinzip der Vorsteuerung. Hierbei wird mit Kenntnis der Regelkreiseigenschaften und der Bahntrajektorie bereits vor dem Erreichen eines Sollwertes eine Stellgröße generiert und dadurch wird ein Erreichen der Bahnpunkte ohne nennenswerte Abweichung mit hoher Dynamik erreicht.

Voraussetzung für diese Art der Vorsteuerung ist der Blick in die Zukunft der Bewegung, was bei modernen NC Systemen kein Problem darstellt, aber für einen autark operierenden Laserbearbeitungskopf nicht möglich ist, da es keinen standardisierten Kommunikationskanal für diese Information gibt.

Davon ausgehend liegt der Erfindung die Aufgabe zu Grunde, ein Verfahren und eine Vorrichtung zur Regelung einer Fokuslage eines Arbeitslaserstrahls zur Bearbeitung von Werkstücken sowie einen damit ausgerüsteten Laserbearbeitungskopf bereit zu stellen, so dass es ermöglicht wird, die Abweichung der Linsenposition von ihrer Soll-position aufgrund von auf Beschleunigen auf möglichst kleine Werte zu begrenzen, um auch bei hochdynamische Maschinenbewegungen die Arbeitsfokusposition präzise beizubehalten.

Diese Aufgabe wird durch das Verfahren nach Anspruch 1, die Vorrichtung nach Anspruch 4 und den Laserbearbeitungskopf nach Anspruch 7 gelöst. Vorteilhafte Ausgestaltungen und Weiterbildungen der Erfindung sind in den Unteransprüchen beschrieben.

Erfindungsgemäß wird also eine Vorgabe für einen Stromregelkreis eines Stellmotors erzeugt und ausgegeben, um eine Optik in eine Sollposition zu bewegen und dort zu halten. Eine in Richtung der optischen Achse der Optik wirkenden Beschleunigung wird erfasst und die ausgegebene Vorgabe für den Stromregelkreis des Stellmotors wird aufgrund der erfassten Beschleunigung variiert, so dass der Stellmotor eine zusätzliche Kraft erzeugt, die der von der erfassten Beschleunigung erzeugten Kraft entgegenwirkt. Die Vorgabe für den Stromregelkreis des Stellmotors wird dabei vorzugsweise so variiert, dass der Motorstrom erhöht wird.

In besonders zweckmäßiger Weise erfolgt die Variation der ausgegebenen Vorgabe für den Stromregelkreis des Stellmotors durch Aufschalten eines entsprechend der erfassten Beschleunigung ermittelten Vorgabewertes.

Das erfindungsgemäße Verfahren lässt sich bevorzugt mit einer Vorrichtung durchführen, die einen Stellmotor zur Verschiebung einer die Fokuslage und/oder einen Fokusdurchmesser einstellenden Optik entlang einer optischen Achse der Optik, einen Positionsregler, der eine Vorgabe für einen Stromregelkreis des Stellmotors ausgibt, um die Optik in eine Sollposition zu bewegen und dort zu halten, einen Beschleunigungssensor, der eine in Richtung der optischen Achse der Optik wirkende Beschleunigung erfasst, und eine Vorsteuerschaltung aufweist, die aufgrund der erfassten Beschleunigung die vom Positionsregler ausgegebene Vorgabe für den Stromregelkreis des Stellmotors so variiert, dass der Stellmotor eine zusätzliche Kraft erzeugt, die der von der erfassten Beschleunigung erzeugten Kraft entgegenwirkt.

Vorteilhafter Weise ist die Vorsteuerschaltung dabei so ausgelegt, dass die Vorgabe für den Stromregelkreis des Stellmotors so geändert wird, dass der Motorstrom erhöht wird. Dabei ist zweckmäßiger Weise ein Vergleicher vorgesehen, dem vom Positionsregler die Vorgabe für den Stromregelkreis des Stellmotors und von der Vorsteuerschaltung ein entsprechend der erfassten Beschleunigung ermittelter Vorgabewert zugeführt ist, so dass die Vorgabe für den Stromregelkreis des Stellmotors durch Aufschalten des Vorgabewertes von der Vorsteuerschaltung variiert wird.

Zur Durchführung des erfindungsgemäßen Verfahrens bei der Laserbearbeitung, insbesondere beim Laserschweißen oder Laserschneiden weist ein Laserbearbeitungskopf mit einem Gehäuse, durch das ein Arbeitslaserstrahlengang geführt ist, in dem zumindest eine Fokuslage und/oder einen Fokusdurchmesser einstellende Optik entlang einer optischen Achse der Optik verschiebbar ist, eine erfindungsgemäße Vorrichtung zur Regelung einer Fokuslage des Arbeitslaserstrahls auf.

Der Erfindung liegt also die Idee zu Grunde, mit einem Beschleunigungssensor den Zustand der externen Beschleunigung zu erkennen und mit dieser Information direkt den Motorstrom zu erhöhen, um eine zusätzliche Kraft zur Kompensation der externen Kraft auf den Optikschlitten zu generieren. Dabei wird der Wert der externen Beschleunigung direkt als Störgrößenaufschaltung in den Stromregelkreis eingekoppelt. Da die Kraft des Antriebs direkt proportional zum Motorstrom ist wirkt eine Erhöhung des Motorstroms direkt der Kraft durch die externe Beschleunigung entgegen ohne die Verzögerung über die Regelabweichung eines Lageregelkreises.

Bei dieser Art des Eingriffs in den Regelkreis muss es nicht erst zu einer Regelabweichung kommen um eine Stellgrößenänderung zu erreichen, sondern es wird unmittelbar mit Einwirken der externen Störgröße eine Kraft mit entgegengesetzter Richtung generiert und somit die Abweichung der Ist Position minimiert.

Die Erfindung wird im Folgenden beispielsweise anhand der Zeichnung näher erläutert. Es zeigen:
Figur 1 eine schematische vereinfachte Darstellung eines Laserbearbeitungskopfes gemäß der Erfindung,
Figur 2 ein schematisches Blockschaltbild eines Regelkreises für einen Stellmotor unter Verwendung einer erfindungsgemäßen Vorrichtung zur Regelung einer Fokuslage eines Arbeitslaserstrahls.

In den verschiedenen Figuren der Zeichnung sind einander entsprechende Elemente mit gleichen Bezugszeichen versehen.

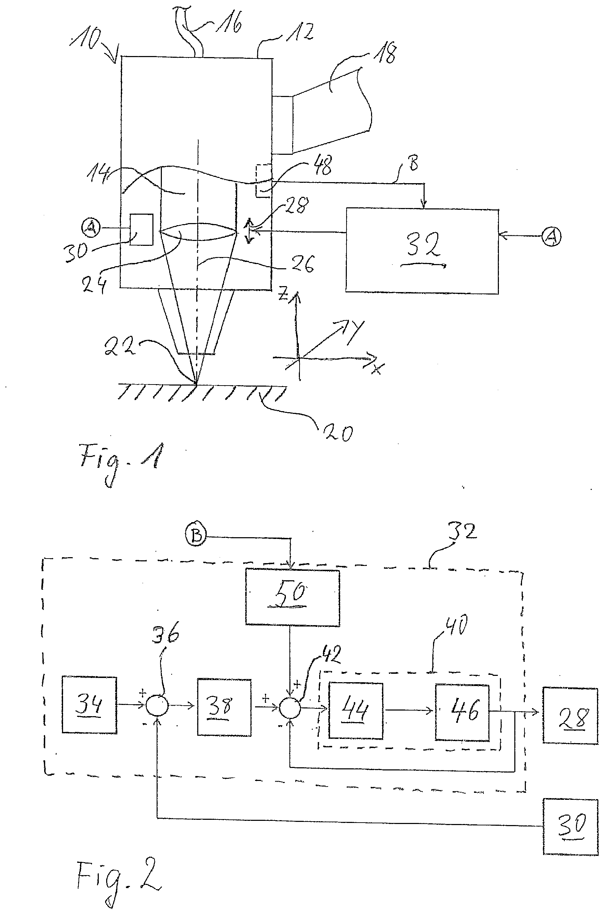

Wie in Figur 1 schematisch dargestellt ist, weist ein Laserbearbeitungskopf 10 ein Gehäuse 12 auf, durch das ein Arbeitslaserstrahlengang für einen Arbeitslaserstrahl 14 geführt ist. Der Arbeitslaserstrahl 14 wird dem Laserbearbeitungskopf 10 beispielsweise über eine entsprechende Lichtleitfaser 16 zugeführt. Der Laserbearbeitungskopf 10 ist mit seinem Gehäuse 12 beispielsweise an einer Hand 18 eines Industrieroboters (nicht dargestellt) angebracht, so dass er von diesem in x-, y- und z-Richtung relativ zur einem Werkstück 20 geführt werden kann.

Um die Lage oder Position eines Fokus 22 des Arbeitslaserstrahls 14 relativ zum Gehäuse 12 einstellen zu können, ist eine Optik 24 in Richtung ihrer optischen Achse 26 verschiebbar angeordnet.

Zur Verschiebung der Optik 24, die in Figur 1 schematisch als Einzellinse dargestellt ist, die aber auch als Linsensystem ausgebildet sein kann und die auf einem nicht dargestellten Schlitten oder dergleichen angeordnet ist, in Richtung ihrer optischen Achse 26 ist ein Stellmotor 28 (siehe Figur 2) vorgesehen, der in Figur 1 nur als Doppelpfeil angedeutet ist. Um die Lage oder Position der Optik 24 im Gehäuse 12 des Laserbearbeitungskopfes 10 zu erfassen, ist ein Weggeber 30 vorgesehen, dessen Ausgang A einer Regelschaltung 32 zugeführt ist, die den Stellmotor 28 so steuert, dass er die Optik 24 entlang ihrer optischen Achse 26, also in z-Richtung des Systems stets in ihre Soll-Position bewegt und dort hält.

In nicht näher dargestellter Weise kann in dem Laserbearbeitungskopf 10 eine weitere Optik zur Kollimation des Arbeitslaserstrahls 14 vorgesehen sein, die eine Lichtaustrittsfläche der Lichtleitfaser 16 abbildet. Diese Kollimatoroptik kann in entsprechender Weise wie die Optik 24 zur Fokussierung des Arbeitslaserstrahls 14 und/oder zur Einstellung der Fokusgröße mittels eines Stellmotors ebenfalls entlang ihrer optischen Achse verschoben werden, wobei ebenfalls Weggeber und Regelschaltung zur Steuerung des Stellmotors vorgesehen sein können.

Während die Lage des Fokus 22 des Arbeitslaserstrahls 14 relativ zum Werkstück 20 in erster Linie durch Verschiebung des Laserbearbeitungskopfes entlang der z-Richtung vom Industrieroboter eingestellt wird, wird die Fokuslage des Arbeitslaserstrahls 14 relativ zum Gehäuse 12 des Laserbearbeitungskopfes 10 sowie der Fokusdurchmesser durch die Verschiebung der Optik 24 und/oder der nicht dargestellten Kollimationsoptik mittels Stellmotoren bewirkt.

Wie in Figur 2 dargestellt ist, weist die Regelschaltung 32 einen Sollwert-Einsteller 34 auf, der eine Vorgabe für die Sollposition an einen Vergleicherkreis 36 liefert, dem vom Weggeber 30 die Istposition zugeführt ist. Der Vergleicherkreis 36 ermittelt somit gegebenenfalls eine Positionsabweichung und führt diese einem Positionsregler 38 zu, der eine Vorgabe für einen Stromregelkreis 40 einem weiteren Vergleicherkreis 42 zuführt. Der Stromregelkreis 40 umfasst einen Stromregler 44, dem das Ausgangssignal vom Vergleicherkreis 42 als Vorgabe zum Einstellen des Motorstroms zugeführt wird, und ein vom Stromregler 44 gesteuertes Stellglied 46 auf, das den Motorstrom einstellt.

Um externe, auf den Laserbearbeitungskopf 10 insbesondere in z-Richtung wirkende Beschleunigungen, also Beschleunigungen, die entlang der optischen Achse 26 der Optik 24 auf diese und auf einen sie tragenden Schlitten oder dergleichen wirken, zu erfassen, ist ein Beschleunigungssensor 48 vorgesehen, dessen Ausgangssignal an eine Vorsteuerschaltung 50 im Regelkreis 32 geliefert wird, wie durch die Leitung B schematisch angedeutet ist.

Die Vorsteuerschaltung 48 liefert einen der erfassten Beschleunigung entsprechenden Vorgabewert an den Vergleicher 42, der direkt als Störgrößenaufschaltung dem Vorgabewert des Positionsreglers 38 zugefügt wird. Der entsprechenden der externen Beschleunigung ermittelte Vorgabewert wird also direkt in den Stromregelkreis 40 eingekoppelt.

Um nach der Einstellung der Fokuslage durch Verschieben der Optik 24 mittels des Stellmotors 28 diese zuverlässig in ihrer Sollposition zu fixieren, werden die insbesondere in z-Richtung, also in Richtung der optischen Achse 26 auf den Laserbearbeitungskopf 10 wirkenden Beschleunigungen vom Beschleunigungssensor 48 erfasst und unmittelbar an die Vorsteuerschaltung 50 geliefert. Diese ermittelt aus der erfassten Beschleunigung eine zusätzliche Kraft, die vom Stellmotor 28 aufgebracht werden muss, um die aufgrund der Beschleunigung auf die Optik 24 und ihre Halte- und Führungsmittel, wie zum Beispiel einen Optikschlitten wirkenden Kräfte zu kompensieren, und gibt einen entsprechenden Vorgabewert aus, der auf die Vorgabe vom Positionsregler 38 direkt aufgeschaltet wird, so dass der Regelkreis 40 den Motorstrom entsprechend erhöht. Da die vom Stellmotor 28 aufgebrachte Kraft direkt zum Motorstrom proportional ist, wird durch die Erhöhung des Motorstroms eine Kraft erzeugt, die direkt der Kraft durch die externe Beschleunigung entgegenwirkt, ohne dass erst eine Abweichung der Ist-Position der Optik 24 von ihrer Soll-Position auftreten müsste.

Aufgrund des erfindungsgemäßen Eingriffs in den Regelkreis unter Berücksichtigung der auftretenden Beschleunigungen muss es also nicht erst zu einer Regelabweichung kommen, um eine entsprechende Stellgrößenänderung zu erreichen, sondern es wird unmittelbar mit Einwirken der externen Störgröße, also mit Einwirken der von der externen Beschleunigung bewirkten Kraft eine Kraft mit entgegengesetzter Richtung erzeugt, so dass die Abweichung der Optik 24 und damit des Fokus 22 von ihren SollPositionen minimiert wird.

## Patentansprüche

1. Verfahren zur Regelung einer Fokuslage eines Arbeitslaserstrahls (14) zur Bearbeitung von Werkstücken (20), bei dem die Fokuslage des Arbeitslaserstrahls (14) durch Verschieben einer Optik (24) entlang einer optischen Achse (26) der Optik (24) mittels eines Stellmotors (28) eingestellt wird, mit folgenden Schritten:
- Erzeugen und Ausgeben einer Vorgabe für einen Stromregelkreis (40) des Stellmotors (28), um die Optik (24) in eine Sollposition zu bewegen und dort zu halten,
- Erfassen einer in Richtung der optischen Achse (26) der Optik (24) wirkenden Beschleunigung, und
- Variieren der ausgegebenen Vorgabe für den Stromregelkreis (40) des Stellmotors (28) aufgrund der erfassten Beschleunigung, so dass der Stellmotor (28) eine zusätzliche Kraft erzeugt, die der von der erfassten Beschleunigung erzeugten Kraft entgegenwirkt.

2. Verfahren nach Anspruch 1, **dadurch gekennzeichnet, dass** die Vorgabe für den Stromregelkreis (40) des Stellmotors so variiert wird, dass der Motorstrom erhöht wird.

3. Verfahren nach Anspruch 1 oder 2, **dadurch gekennzeichnet, dass** die ausgegebene Vorgabe für den Stromregelkreis (40) des Stellmotors (28) durch Aufschalten eines entsprechend der erfassten Beschleunigung ermittelten Vorgabewertes variiert wird.

4. Vorrichtung zur Regelung einer Fokuslage eines Arbeitslaserstrahls (14) zur Bearbeitung von Werkstücken (20) mit
- einem Stellmotor (28) zur Verschiebung einer die Fokuslage und/oder einen Fokusdurchmesser einstellenden Optik (24) entlang einer optischen Achse (26) der Optik (24),
- einem Positionsregler (38), der eine Vorgabe für einen Stromregelkreis (40) des Stellmotors (28) ausgibt, um die Optik (24) in eine Sollposition zu bewegen und dort zu halten,
- einem Beschleunigungssensor (48), der eine Beschleunigung erfasst, und **gekennzeichnet durch**
- eine Vorsteuerschaltung (50), die aufgrund der erfassten Beschleunigung die vom Positionsregler (38) ausgegebene Vorgabe für den Stromregelkreis (40) des Stellmotors (28) so variiert, dass der Stellmotor (28) eine zusätzliche Kraft erzeugt, die der von der erfassten Beschleunigung erzeugten Kraft entgegenwirkt.

5. Vorrichtung nach Anspruch 4, **dadurch gekennzeichnet, dass** die Vorsteuerschaltung (50) so ausgelegt ist, dass die Vorgabe für den Stromregelkreis (40) des Stellmotors (28) so variiert, dass der Motorstrom erhöht wird.

6. Vorrichtung nach Anspruch 4 oder 5, **dadurch gekennzeichnet, dass** ein Vergleicher (42) vorgesehen ist, dem vom Positionsregler (38) die Vorgabe für den Stromregelkreis (40) des Stellmotors (28) und von der Vorsteuerschaltung (50) ein entsprechend der erfassten Beschleunigung ermittelter Vorgabewert zugeführt ist, so dass die Vorgabe für den Stromregelkreis (40) des Stellmotors (28) durch Aufschalten des Vorgabewertes von der Vorsteuerschaltung (50) variiert wird.

7. Vorrichtung nach einem der Ansprüche 4 bis 6, wobei der Beschleunigungssensor (48) eine in Richtung der optischen Achse (26) der Optik (24) wirkende Beschleunigung erfasst.

8. Laserbearbeitungskopf (10) mit einem Gehäuse (12), durch das ein Arbeitslaserstrahlengang geführt ist, in dem zumindest eine Fokuslage und/oder einen Fokusdurchmesser einstellende Optik (24) entlang einer optischen Achse (26) der Optik (24) verschiebbar ist, und mit einer Vorrichtung zur Regelung einer Fokuslage des Arbeitslaserstrahls (14) nach einem der Ansprüche 4, 5, 6, oder 7.

## Claims

1. A method for controlling a focus point of a working laser beam (14) for machining workpieces (20), wherein said focus point of said working laser beam (14) is adjusted by displacing an optics (24) along an optical axis (26) of said optics (24) by means of an actuating motor (28), said method comprising the following steps:
- generating and outputting a set point for a current control loop (40) of said actuating motor (28) in order to move said optics (24) to a desired position and to hold it there,
- detecting an acceleration acting in the direction of said optical axis (26) of said optics (24), and
- varying the output set point for said current control loop (40) of said actuating motor (28) due to the detected acceleration such that said actuating motor (28) generates an additional force counteracting the force generated by the detected acceleration.

2. The method according to claim 1, **characterized in that** the set point for said current control loop (40) of said actuating motor is varied such that the motor current is increased.

3. The method according to claim 1 or 2, **characterized in that** the output set point for said current control loop (40) of said actuating motor (28) is varied by applying a set point value determined according to the detected acceleration.

4. A device for controlling a focus point of a working laser beam (14) for machining workpieces (20), said device comprising:
- an actuating motor (28) for displacing an optics (24) adjusting said focus point and/or a focus diameter along an optical axis (26) of said optics (24),
- a position controller (38) outputting a set point for a current control loop (40) of said actuating motor (28) in order to move said optics (24) to a desired position and to hold it there,
- an acceleration sensor (48) detecting an acceleration, and **characterized in that**
- a pilot control circuit (50) varying the set point output from said position controller (38) for said current control loop (40) of said actuating motor (28) due to the detected acceleration such that said actuating motor (28) generates an additional force counteracting the force generated by the detected acceleration.

5. The device according to claim 4, **characterized in that** said pilot control circuit (50) is configured such that the set point for said current control loop (40) of said actuating motor (28) varies such that the motor current is increased.

6. The device according to claim 4 or 5, **characterized in that** a comparator (42) is provided, said comparator (42) being supplied with the set point for said current control loop (40) of said actuating motor (28) by said position controller (38) and with a set point value determined according to the detected acceleration by said pilot control circuit (50), so that the set point for said current control loop (40) of said actuating motor (28) is varied by applying the set point value of said pilot control circuit (50).

7. The device according to one of claims 4 to 6, wherein the acceleration sensor (48) detects an acceleration acting in the direction of the optical axis (26) of said optics (24).

8. A laser machining head (10) having a housing (12) through which a working laser beam path is guided, wherein at least one optics (24) adjusting a focus point and/or a focus diameter is displaceable along an optical axis (26) of said optics (24), and comprising a device for controlling a focus point of said working laser beam (14) according to one of claims 4, 5, 6 or 7.

## Revendications

1. Procédé pour réguler une position focale d'un faisceau laser de travail (14) afin d'usiner des pièces (20), dans lequel la position focale du faisceau laser de travail (14) est réglée en déplaçant une optique (24) le long d'un axe optique (26) de l'optique (24) au moyen d'un servomoteur (28), comportant les étapes suivantes consistant à :
- générer et délivrer en sortie un réglage par défaut pour un circuit de régulation de courant (40) du servomoteur (28) afin d'amener l'optique (24) dans une position de consigne et de l'y maintenir,
- détecter une accélération agissant en direction de l'axe optique (26) de l'optique (24), et
- faire varier le réglage par défaut délivré en sortie pour le circuit de régulation de courant (40) du servomoteur (28) sur la base de l'accélération détectée, de telle sorte que le servomoteur (28) génère une force supplémentaire qui contrecarre la force générée par l'accélération détectée.

2. Procédé selon la revendication 1, **caractérisé en ce que** le réglage par défaut pour le circuit de régulation de courant (40) du servomoteur varie de telle sorte que le courant de moteur est augmenté.

3. Procédé selon la revendication 1 ou 2, **caractérisé en ce que** le réglage par défaut délivré en sortie pour le circuit de régulation de courant (40) du servomoteur (28) varie en appliquant une valeur par défaut déterminée en fonction de l'accélération détectée.

4. Dispositif pour réguler une position focale d'un faisceau laser de travail (14) afin d'usiner des pièces (20) comportant :
- un servomoteur (28) pour déplacer une optique (24) réglant la position focale et/ou un diamètre focal le long d'un axe optique (26) de l'optique (24),
- un régulateur de position (38) qui délivre en sortie un réglage par défaut pour un circuit de régulation de courant (40) du servomoteur (28) afin d'amener l'optique (24) dans une position de consigne et de l'y maintenir,
- un capteur d'accélération (48) qui détecte une accélération, et **caractérisé par**
- un circuit de pré-commande (50) qui fait varier le réglage par défaut délivré en sortie du régulateur de position (38) pour le circuit de régulation de courant (40) du servomoteur (28) sur la base de l'accélération détectée, de telle sorte que le servomoteur (28) génère une force supplémentaire qui contrecarre la force générée par l'accélération détectée.

5. Dispositif selon la revendication 4, **caractérisé en ce que** le circuit de pré-commande (50) est conçu de telle sorte que le réglage par défaut pour le circuit de régulation de courant (40) du servomoteur (28) varie de telle sorte que le courant de moteur est augmenté.

6. Dispositif selon la revendication 4 ou 5, **caractérisé en ce qu'**est prévu un comparateur (42) auquel le régulateur de position (38) fournit le réglage par défaut pour le circuit de régulation de courant (40) du servomoteur (28) et le circuit de pré-commande (50) fournit une valeur par défaut déterminée en fonction de l'accélération déterminée, de telle sorte que le réglage par défaut pour le circuit de régulation de courant (40) du servomoteur (28) varie en appliquant la valeur par défaut par le circuit de pré-commande (50).

7. Dispositif selon l'une des revendications 4 à 6, dans lequel le capteur d'accélération (48) détecte une accélération agissant en direction de l'axe optique (26) de l'optique (24).

8. Tête d'usinage au laser (10) comportant un boîtier (12), à travers lequel un trajet de faisceau laser de travail est guidé, dans laquelle une optique (24) réglant au moins une position focale et/ou un diamètre focal peut être déplacé le long d'un axe optique (26) de l'optique (24), et comportant un dispositif pour réguler une position focale du faisceau laser de travail (14) selon l'une des revendications 4, 5, 6 ou 7.
